## Europäisches Patentamt

## European Patent Office

## Office européen des brevets

(19)

(11) Veröffentlichungsnummer: **0 177 446 B1**

(12) **EUROPÄISCHE PATENTSCHRIFT**

(45) Veröffentlichungstag der Patentschrift:
26.07.89

(51) Int. Cl.⁴: **A 47 J 37/12, H 05 B 3/42, A 47 J 27/00**

(21) Anmeldenummer: **85810433.4**

(22) Anmeldetag: **24.09.85**

(54) Friteuse mit Wanne, Trog, Sumpf und elektrischem, flächigem Heizkörper.

(30) Priorität: **24.09.84 CH 4563/84**

(43) Veröffentlichungstag der Anmeldung:
**09.04.86 Patentblatt 86/15**

(45) Bekanntmachung des Hinweises auf die Patenterteilung:
**26.07.89 Patentblatt 89/30**

(84) Benannte Vertragsstaaten:
**AT BE CH DE FR GB IT LI LU NL SE**

(56) Entgegenhaltungen:
**CH-A- 249 084**
**CH-A- 588 246**
**FR-A- 945 272**
**FR-A- 964 853**
**FR-A- 2 244 436**
**GB-A- 668 613**
**US-A- 2 128 738**
**US-A- 2 360 727**
**US-A- 2 756 321**

(73) Patentinhaber: **NIRO PLAN AG, Baarerstrasse 59, CH-6300 Zug (CH)**

(72) Erfinder: **Schwizer, Anton, Moosacker, CH-6264 Pfaffnau (CH)**

(74) Vertreter: **Troesch, Hans Alfred, Dr. Ing. et al, Walchestrasse 19, CH-8035 Zürich (CH)**

## Beschreibung

Die vorliegende Erfindung betrifft eine Friteuse mit einer ölaufnehmenden Wanne, deren schmälerer Unterteil einen Öltrog bildet sowie mit elektrischen Heizelementen, welche mit von Öl berührten Wandteilen wärmeleitend verbunden sind, wobei die Heizelemente schnittenförmig ausgebildet sind und an Aussenflächen von ölberührten Wandteilen in flachen Umhüllungen stecken.

Zum Stande der Technik gehört eine Friteuse mit einem indirekten Heizsystem, bei welchem Wandteile des Ölbehältnisses durch nicht auswechselbare Heizkörper geheizt werden. Die eigentlichen Heizelemente sind in den Heizkörpern ebenfalls nicht auswechselbar eingeschlossen, so dass bei Beschädigung der Heizelemente das ganze ölaufnehmende Becken ausgewechselt werden muss.

Nicht glatte, z.B. gewellte Oberflächen des Ölbeckens sind zudem schwierig zu reinigen, eine von den Hausfrauen und in den Restaurants wenig geschätzte Tatsache.

Aus der US-A 2 128 738 ist eine Friteuse mit einer ölaufnehmenden Wanne und einem unter dieser angeordneten schmäleren Öltrog sowie mit elektrischen Heizelementen bekannt, welche mit von Öl berührten Wandteilen wärmeleitend verbunden sind. Ferner ist aus diesem Dokument bekannt, dass die Heizelemente schnittenförmig ausgebildet sind und an Aussenflächen von ölberührten Wandteilen in flachen Umhüllungen stecken. Dieser Friteuse fehlt jedoch ein zweckdienlicher Sumpfteil sowie die Möglichkeit, defekte Heizkörper individuell auf einfache Weise auszuwechseln.

Bei bekannten Friteusen stellt die Überhitzung des Öls, verbunden mit dem Reinigen der Wände, zusammen mit der gleichmässigen thermischen Wandbelastung und der Möglichkeit, ohne grosse Demontagearbeiten, die im allgemeinen störungsanfälligsten Elemente, nämlich die Heizelemente – sogar ohne Beizug eines Fachmannes – mühelos ersetzen zu können, ein grosses Problem dar. Es ist zwar aus der CH-A 249 084 bekannt geworden, bei einem gewöhnlichen Kochgefäss elektrische Austauschelemente vorzusehen. Diese Konstruktion trägt den gegebenen Umständen nicht Rechnung, dass nämlich beim Fritieren in der unten liegenden Tasche sich Verunreinigungen ansammeln, welche vom Ölbad, das mit dem zu fritierenden Gut in Berührung kommt, abzusondern sind, eine Bedingung, welche bei Kochgefässen nicht auftritt.

Die vorliegende Erfindung bezweckt die Schaffung einer Friteuse, welche nicht nur leicht reinigbar ist, sondern bei welcher beim Versagen einzelner Heizelemente diese individuell auswechselbar sind.

Diese Aufgabe wird durch die Schaffung einer Friteuse erreicht, welche sich dadurch auszeichnet, dass die Heizelemente auswechselbar mit Schiebesitz in taschenartigen, durchgehend offenen, wärmeleitenden Umhüllungen stecken,
wobei die Umhüllungen durch eine flache Trägerplatte gebildet sind, auf der ein längsgesicktes Blech befestigt ist, durch das Gehäuseaufsätze festgelegt sind, wobei die durch die Gehäuseaufsätze gebildeten Öffnungen die Form paralleler, durchgehender Kanäle zur Aufnahme der Heizelemente aufweisen.

Die Erfindung wird anschliessend anhand einer Zeichnung erläutert.

Es zeigen in rein schematischer Darstellung:

Fig. 1 einen Querschnitt durch eine sogenannte Duplex-Friteuse mit ausschliesslich elektrischer Heizung,

Fig. 2 eine Seitenansicht der Friteuse gemäss Fig. 1m, mit weggehobenen Teilen,

Fig. 3 einen vergrösserten Ausschnitt aus dem Heizungsteil des Öltroges,

Fig. 4 eine perspektivische Darstellung eines Ausschnittes aus einem elektrischen, ebenflächigen Heizkörper,

Fig. 5 eine Darstellung analog Fig. 1 einer gas/elektrisch betriebenen Friteuse,

Fig. 6 eine Darstellung analog Fig. 2 der Friteuse gemäss Fig. 5.

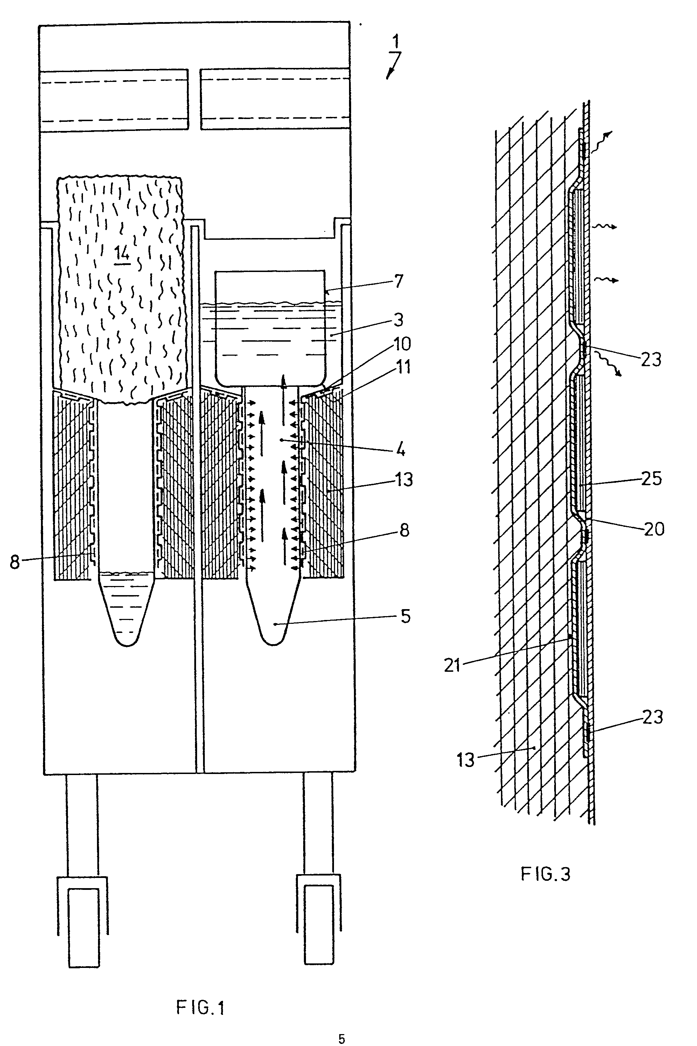

Fig. 1 zeigt den Aufbau einer Friteuse 1, mit einer ölaufnehmenden Wanne 3 und einem darunter angeordneten, schmalen Öltrog 4, der in einem Sumpf 5 endet. Die Wanne 3 dient der Aufnahme eines Korbes 7, in dem sich die zu fritierenden Gegenstände befinden. Die Seitenwände des schmalen Öltroges 4 sind zu einem grossen Teil mit elektrischen Heizelementen 8 bedeckt. Weitere derartige elektrische Heizelemente 11 befinden sich im Wandbereich, der zwei Schultern 10 festlegt. Die Heizelemente 8 und 11 sind nach aussen hin mittels einer Isolation 13 isoliert.

Wird die Friteuse 1 angewärmt, so ruht vielfach ein Fettblock 14 auf den Schultern 10. Der in die Wanne 3 eingebrachte Block 14 wird, von dessen Auflageflächen ausgehend, durch die elektrischen Heizelemente 11 geschmolzen. Das geschmolzene Fett tropft vorerst in den Sumpf 5 ab und füllt dann nach und nach den schmalen Öltrog 4, bis es, wie rechts in der Zeichnung angedeutet, auch in der Wanne 3 die zum Fritieren nötigen Höhe erreicht. Die Heizelemente 8 und 11, welche gruppenweise entsprechend eingeschaltet werden, sorgen für die Aufrechterhaltung der nötigen Temperatur des geschmolzenen Fettes, ohne dieses indessen zu überhitzen.

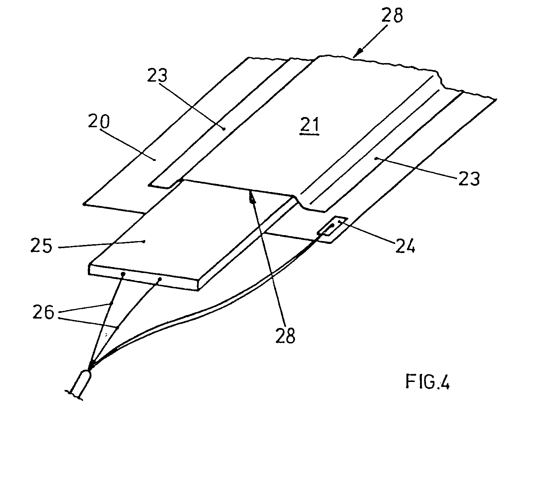

Als Heizelemente dienen die im Ausschnitt dargestellten Heizelemente gemäss Fig. 4 mit einer Trägerplatte 20, die im allgemeinen und vorteilhafterweise die Wand des entsprechenden aufzuheizenden Behältnisses ist. Hier ist es die Wand des schmalen Öltroges 4. Eine Trägerplatte bildet ebenfalls im obern Teil der Friteuse die Wand der Schultern 10. Auf dieser Trägerplatte 20 ist ein längsgesicktes Blech, mit der Funktion, einen Gehäuseaufsatz 21 festzulegen, mittels paralleler Schweissnähte 23 befestigt. Dieser Gehäuseaufsatz ist mitsamt der Trägerplatte 20 durch einen Erdanschluss 24 geerdet, während die zwischen Trägerplatte 20 und Gehäuseaufsatz 21 gebildeten Öffnungen in Form durchgehender Kanäle der Aufnahme von elektrischen Heizelementen in Form von Heizschnitten 25 dienen. Diese werden einzeln über elektrische Drähte 26 mit Strom versorgt. Der die Heizschnitte 25 aufnehmende Kanal weist zwei offene Enden 28 auf, was ein müheloses Einbringen der Heizschnitte 25 bzw. deren Auswechseln gestattet und das Sauberhalten der Kanäle erleichtert. Dabei sind die Abmessungen der Kanäle so gewählt, dass die Heizschnitte infolge Wahl einer Schiebesitzpassung mühelos eingeschoben und ausgezogen werden können und trotzdem im wesentlichen spielfrei in den Kanälen verpackt sind. Dies ermöglicht, bei Beschädigung einzelner Elemente deren leichtes Auswechseln, was nicht nur eine schnelle Wiederverwendung der Friteuse sicherstellt, sondern auch wirtschaftlich ausserordentlich vorteilhaft ist. Auch die Herstellung der Heizung ist, wie die Fig. 3 und 4 eindrücklich zeigen, äusserst einfach und wenig arbeitsintensiv, wobei die Blech-Biege- und Schweissarbeiten entweder mit Automaten oder durch Roboter billig und effizient durchführbar sind.

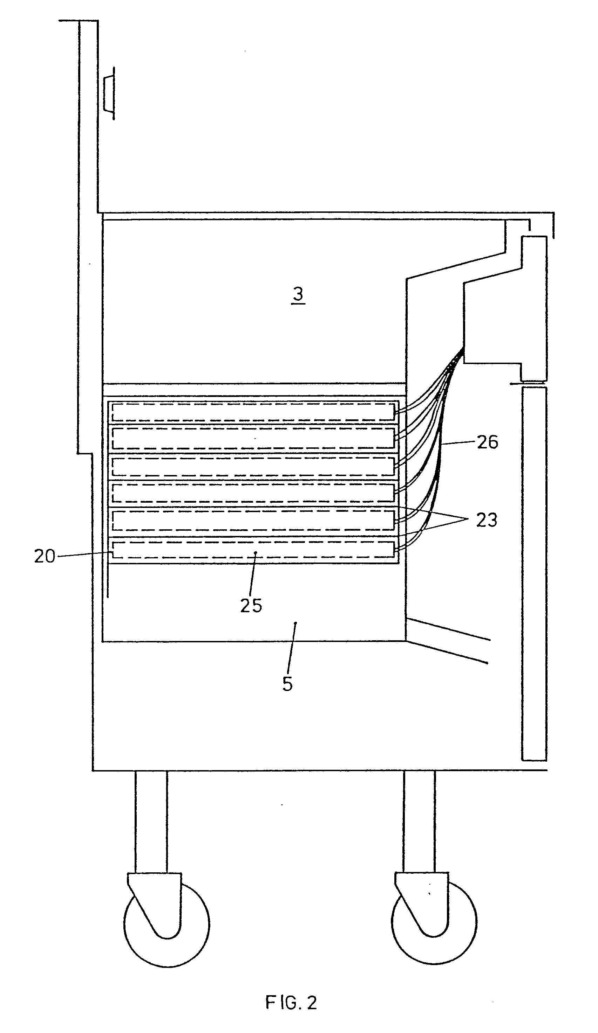

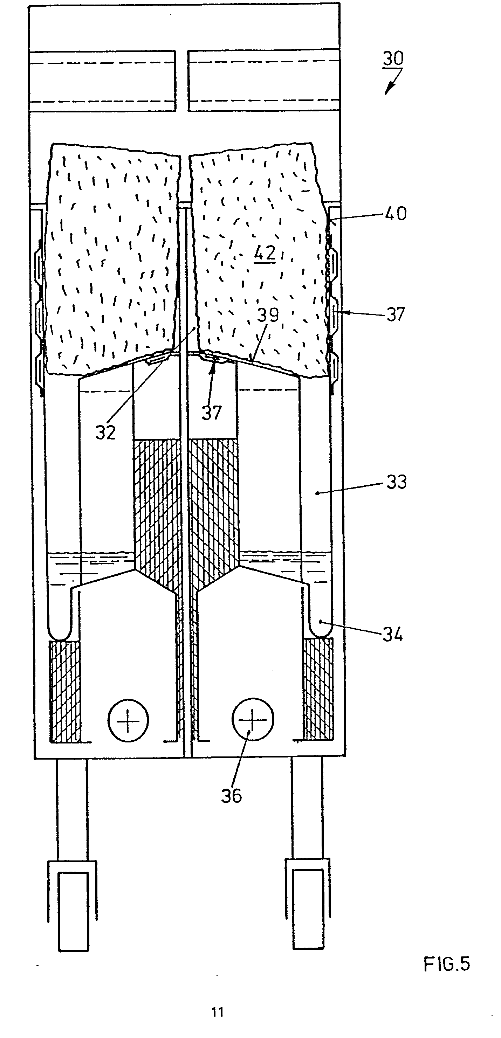

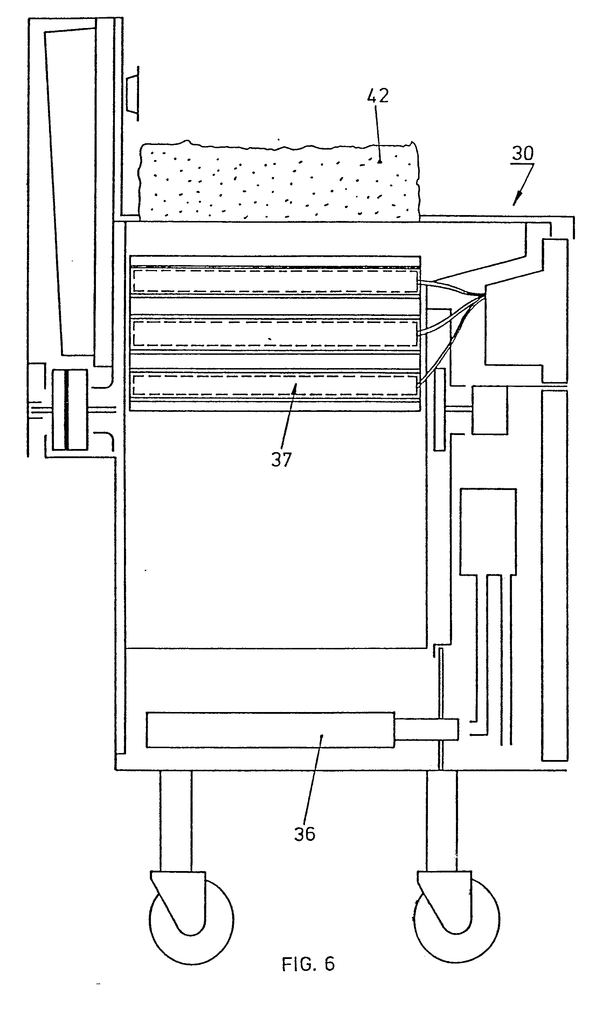

Eine Variante zur beschriebenen elektrisch beheizten Friteuse gemäss den Fig. 1 bis 3 zeigen die Fig. 5 und 6. Hier kommt eine gemischte Heizung zur Anwendung. Die dargestellte Friteuse 30 weist fett- bzw. ölseitig eine Wanne 32 auf, welche über einen schräg verlaufenden Wannenboden 39 in einen Trog 33 übergeht. Dieser endet in einem Sumpf 34.

Der untere Teil der Friteuse wird hier durch eine Gasheizung 36 auf Temperatur gehalten, während dazu im obern Teil elektrische Heizelemente 37 vorgesehen sind. Deren Aufbau geht aus den Fig. 3 und 4 hervor. Auf Grund des schrägen Wannenbodens und des diesen aufheizenden Heizelementes 37 strömt das geschmolzene Fett in den Trot 33 ab, während der Fettblock 42 gegen die elektrisch beheizte Aussentrogwand 40 drückt, und auch hier wirkungsvoll schmilzt. Da die dargestellte Gasheizung bei Friteusen grundsätzlich bekannt ist, wird auf deren eingehende Erläuterung verzichtet.

Die Verwendung derartiger elektrischer Flachheizkörper verhütet örtliche Überhitzungen des Fettes bzw. Öls.

## Patentansprüche

1. Friteuse (1) mit einer ölaufnehmenden Wanne (3), deren schmälerer Unterteil einen Öltrog (4) bildet sowie mit elektrischen Heizelementen (11), welche mit von Öl berührten Wandteilen (20) wärmeleitend verbunden sind, wobei die Heizelemente (11) schnittenförmig (25) ausgebildet sind und an Aussenflächen von ölberührten Wandteilen in flachen Umhüllungen (20, 21) stecken, dadurch gekennzeichnet, dass die Heizelemente (25) auswechselbar mit Schiebesitz in taschenartigen, durchgehend offenen, wärmeleitenden Umhüllungen (20, 21) stecken, wobei die Umhüllungen durch eine flache Trägerplatte gebildet sind, auf der ein längsgesicktes Blech befestigt ist, durch das Gehäuseaufsätze (21) festgelegt sind, wobei die durch die Gehäuseaufsätze gebildeten Öffnungen die Form paralleler, durchgehender Kanäle zur Aufnahme der Heizelemente (11) aufweisen.

2. Friteuse nach Anspruch 1, dadurch gekennzeichnet, dass zumindest ein Teil des Wannenbodens (10) elektrisch (11) beheizt ist.

3. Friteuse nach Anspruch 1 oder 2, dadurch gekennzeichnet, dass der Wannenboden (10) gegen den Trog (4) hin geneigt ist.

4. Friteuse nach mindestens einem der Ansprüche 1 bis 3, dadurch gekennzeichnet, dass mindestens diejenige Seitenwand elektrisch beheizt ist, gegen welche ein auf dem Wannenboden (10) ruhender Fettblock zu gleiten strebt.

5. Friteuse nach mindestens einem der Ansprüche 1 bis 4, dadurch gekennzeichnet, dass sie eine gas/elektrische Mischheizung (36, 37) aufweist, wobei zumindest die Wanne (32) elektrisch beheizt ist.

## Claims

1. Fryer (1) with an oil-holding well (3) whose narrower lower portion forms an intermediate zone (4), and with electrical heating elements (11) in thermally conductive connection with wall portions contacted by oil, wherein the heating elements (11) are blade-shaped (25) and are inserted in flat casings (20, 21) against the outer surfaces of wall portions contacted by oil, characterised in that the heating elements (25) are replaceably inserted with sliding fit in pocket-like continuously open thermally conductive casings (20, 21), wherein the casings comprise a flat support plate to which is affixed a longitudinally-flanged metal sheet defining housing projections, wherein the apertures formed by the housing projections are shaped as parallel continuous channels to hold the heating elements (11).

2. Fryer as in Claim 1 characterised in that at least part of the well floor (10) is electrically heated (11).

3. Fryer as in Claim 1 or 2, characterised in that the well floor (10) slopes towards the intermediate zone (4).

4. Fryer as in at least one of Claims 1–3, characterised in that at least that side-wall is heated towards which a block of fat resting on the well floor (10) tends to slide.

5. Fryer as in at least one of Claims 1–4, characterised by mixed gas/electric heating, wherein at least the well (32) is electrically heated.

## Revendications

1. Friteuse (1) qui comporte une cuve (3) contenant de l'huile, dont la partie inférieure plus étroite constitue une chambre intermédiaire d'huile (4), et des éléments de chauffage électriques (11), qui sont en liaison conductrice de la chaleur avec des parties de parois (20) en contact avec l'huile, les éléments de chauffage (11) étant constitués en forme de segments (25) et insérés dans des gaines plates (20, 21) sur les faces extérieures de parties de parois en contact avec l'huile, caractérisée en ce que les éléments de chauffage (25) sont insérés de manière interchangeable, avec un siège coulissant, dans des gaines en forme de poches (20, 21) ouvertes sans interruption et conduisant la chaleur, lesquelles gaines sont constituées par une plaquesupport plate sur laquelle est fixée une tôle à moulures longitudinales, au moyen de laquelle sont formés des appendices (21) du corps, les ouvertures délimitées par les appendices présentant la forme de canaux parallèles continus destinés à la réception des éléments de chauffage (11).

2. Friteuse selon la revendication 1, caractérisée en ce qu'au moins une partie du fond (10) de la cuve est chauffée électriquement (11).

3. Friteuse selon la revendication 1 ou 2, caractérisée en ce que le fond (10) de la cuve s'incline en direction de la chambre intermédiaire (4).

4. Friteuse selon l'une au moins des revendications 1 à 3, caractérisée en ce qu'est chauffée électriquement au moins la paroi latérale le long de laquelle un bloc de graisse posé sur le fond (10) de la cuve tend à glisser.

5. Friteuse selon l'une au moins des revendications 1 à 4, caractérisée en ce qu'elle présente un chauffage mixte gaz/électricité (36, 37) avec lequel la cuve (32) au moins est chauffée électriquement.

FIG.1

FIG.3

FIG. 2

FIG.4

FIG.5

FIG. 6